# EUROPEAN PATENT APPLICATION

(11) **EP 2 241 800 A1**
(43) Date of publication of application: **20.10.2010**
(21) Application number: 08872029.7
(22) Date of filing: 12.11.2008
(51) Int. Cl.: F21V 8/00, F21S 2/00, F21V 3/00, F21V 3/04, G02B 6/00, G02F 1/13357, F21Y 101/02

(54) **ILLUMINATING DEVICE AND LIQUID CRYSTAL DISPLAY DEVICE**

(30) Priority: 05.02.2008 JP 2008025687
(71) Applicant: Sharp Kabushiki Kaisha, Osaka-shi, Osaka 545-8522 (JP)
(72) Inventor: MASUDA, Takeshi, Osaka-shi, Osaka 545-8522 (JP); AJICHI, Yuhsaku, Osaka-shi, Osaka 545-8522 (JP); NISHIDA, Kenji, Osaka-shi, Osaka 545-8522 (JP)
(74) Representative: Müller - Hoffmann & Partner
(86) International application number: PCT/JP2008/070566
(87) International publication number: WO 2009/098809

(57) **Abstract**

A backlight (illumination device) 2 of the present invention includes light sources 5, optical guides 7 and 17 for causing a surface emission of light from the light sources 5, and a diffusing plate 8 for diffusing the light emitted via the optical guides 7 and 17. The diffusing plate 8 faces light-emitting surfaces of the optical guides 7 and 17, and is provided with a light-amount adjusting section 11 made from a transflective material and for causing a reduction in amount of light transmitted therethrough. The light-amount adjusting section 11 is provided to correspond to a region which causes a bright line due to the light from the light sources 5, i.e., so that its orthogonal projection to a light-emitting region defined by the light-emitting surfaces covers a boundary between the optical guides 7 and 17. By the above, an illumination device providing high luminance uniformity can be obtained.

## Description

### Technical Field

The present invention relates to (i) an illumination device, which is used as a backlight for use in a liquid crystal display device or the like, and (ii) a liquid crystal display device including the illumination device.

### Background Art

Liquid crystal display devices have increasingly replaced cathode-ray tube (CRT) based display devices. Such liquid crystal display devices have advantages in features such as energy saving, a reduced thickness, and lightweight. For their advantages, the liquid crystal display devices have been widely used in liquid crystal display televisions, monitors, mobile phones, and the like devices. One way to utilize such advantages of the liquid crystal display devices is to improve an illumination device (so called a backlight) provided behind a light crystal display device.

Illumination devices are broadly classified into a side light type (also kwon as edge light type) and a direct backlight type. The side light type is configured such that optical guides are provided behind a liquid crystal panel and light sources are provided to lateral edges of the respective optical guides. According to the configuration, light emitted from a light source is reflected by a corresponding optical guide such that the liquid crystal display panel is irradiated with the light indirectly and uniformly. With the configuration, it is possible to realize an illumination device having a reduced thickness and good luminance uniformity although its luminance is low. Thus, a side light type illumination device is mainly employed in a medium to small size liquid crystal display for use in a mobile phone or a laptop personal computer.

One example of the side light type illumination devices is disclosed in Patent Literature 1. Patent Literature 1 discloses a surface-emitting device in which an optical guide has a reflecting surface provided with a plurality of dots so as to allow for uniform light emission from a light-emitting surface. In the surface-emitting device, no light is transmitted to a corner portion of the reflecting surface due to a directivity of a light source, and as such, the corner portion of the reflecting surface is darkened. In order to deal with this, the corner portion of the reflecting surface has a higher dot-density than the remaining part of the reflecting surface.

A direct backlight type illumination device is, on the other hand, configured such that a plurality of light sources are arranged behind a liquid crystal display panel so as to directly illuminate the liquid crystal display panel. As such, it is easier even for a large screen to have high luminance. Therefore, the direct backlight type illumination device is mainly employed in a large size liquid crystal display of 20 inches or more. However, a currently-available direct backlight type illumination device has a thickness in a rage of approximately 20 to 40 mm, and this constitutes a barrier to a further reduction of a thickness of a display.

The large size liquid crystal display can have a further reduced thickness, in a case where light sources and a liquid crystal display panel are provided closer to each other. In the case, however, it is impossible for an illumination device to have luminance uniformity unless a plurality of light sources are provided. Yet, providing of the plurality of light sources increases a cost. In such circumstances, there is a demand for a development of a thin illumination device in which good luminance uniformity can be obtained without providing the increased number of light sources.

Conventionally, the following attempt has been made in order to solve the problem. Specifically, a plurality of side light type illumination devices are arranged so as to reduce a thickness of the large size liquid crystal display.

For example, Patent Literature 2 discloses a surface light-source device in which a wide light-emitting area can be secured by a compact configuration. As such, the surface light-source device disclosed in Patent Literature 2 is suitably applicable in a large size liquid crystal display. The surface light-source device has a tandem structure in which tabular optical guiding blocks are arranged tandemly and provided with respective light sources each for supplying primary light to corresponding one of the tabular optical guiding blocks.

An illumination device configured as described above, in which a plurality of light-emitting units each formed by a combination of a light source and an optical guide are arranged, is referred to as a tandem illumination device.

### Citation List

Patent Literature 1
   Japanese Patent Application Publication, Tokukai, No. 2003-43266 A (Publication Date: February 13, 2003)
Patent Literature 2
   Japanese Patent Application Publication, Tokukaihei, No. 11-288611 A (Publication Date: October 19, 1999)
Patent Literature 3
   Japanese Patent Application Publication, Tokukai, No. 2001-312916 A (Publication Date: November 9, 2001)
Patent Literature 4
   Japanese Patent Application Publication, Tokukai, No. 2001-75096 A (Publication Date: March 23, 2001)

### Summary of Invention

An illumination device including combinations of optical guides and light sources, as described above, may be configured such that a plurality of the optical guides are arranged in a plane. In the case, however, the illumination device has a problem in that a region corresponding to a joint between any adjacent ones of the optical guides causes a bright line, thereby causing luminance unevenness. Despite the configuration of the illumination device, this still cause luminance nonuniformity.

The following description discusses how a bright line is caused in principle. Fig. 5 is a cross sectional view schematically showing how optical guides in a tandem backlight are configured. Figs. 7 and 8 are views each schematically showing a direction in which light transmitted within each optical guide travels.

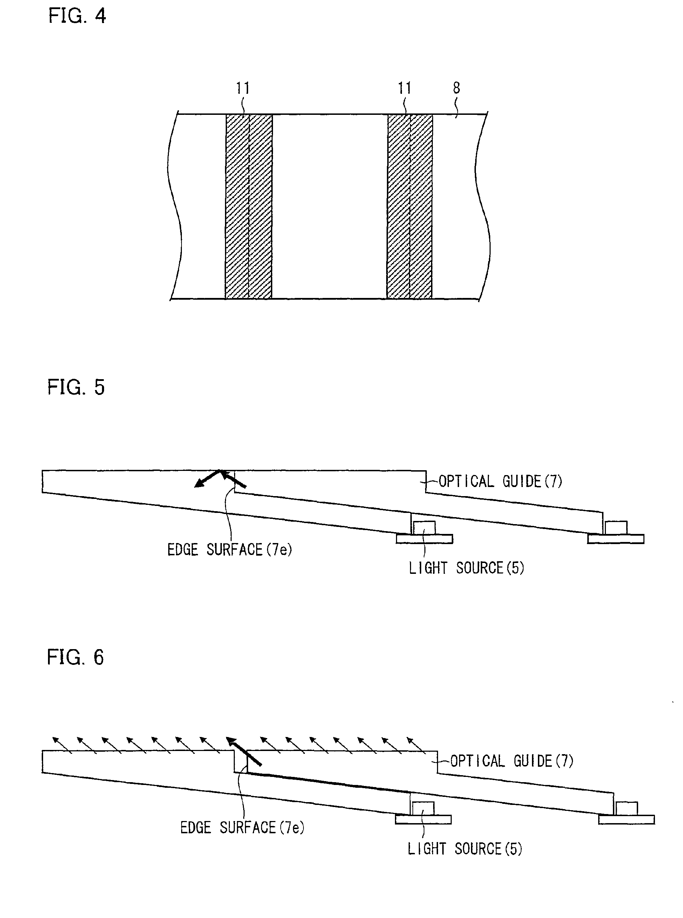

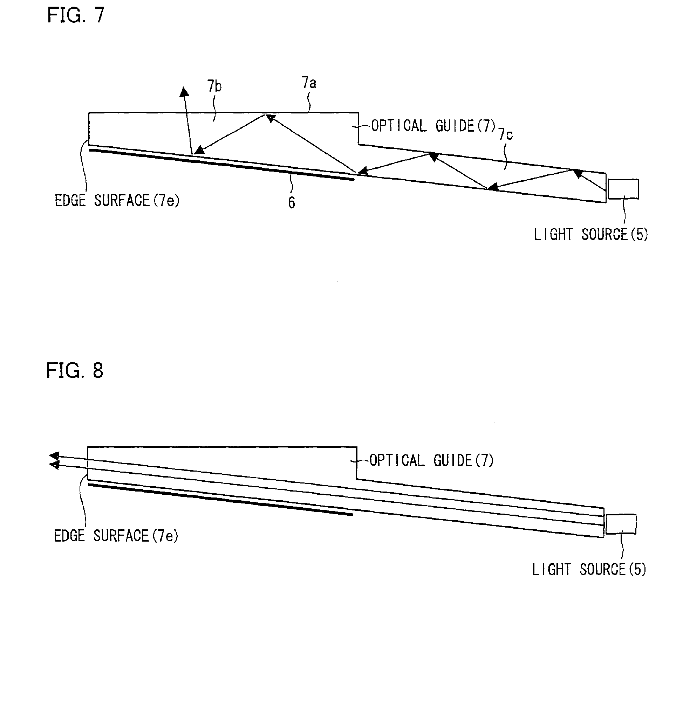

As shown in Fig. 5, a first optical guide (an optical guide on a left side in Fig. 5) and a second optical guide (an optical guide on a right side in Fig. 5) adjacent to each other are provided such that respective parts of the first optical guide and the second optical guides overlap each other with no gap formed between them. According to the configuration, as shown in Fig. 7, most of light emitted from a light source is transmitted within a corresponding optical guide while being repeatedly subjected to total reflection, and is outputted outward from the optical guide via a light-emitting surface. However, as shown in Fig. 8, a part of the light emitted from the light source is not subjected to total reflection, but directly reaches an edge surface (7e) farthermost from the light source. Such part of the light has no decrease in an amount caused due to the total reflection, and has a greater intensity. Therefore, the part of the light outputted via the edge surface (7e) appears as a bright line.

According to the configuration shown in Fig. 5, on the other hand, light outputted from the second optical guide (the optical guide on a right side in Fig. 5) via an edge surface 7e farthermost from a corresponding light source is entered into the first optical guide (the optical guide on a left side in Fig. 5), and transmitted within it (see bold arrows in Fig. 5). Then, the light in the first optical guide is repeatedly subjected to total reflection, and then outputted from the first optical guide via a light-emitting surface. In the configuration shown in Fig. 5, as seen in the above, a continuous light-emitting surface is defined a plurality of the optical guides. This prevents a bright line from being caused, and allows for luminance uniformity.

However, optical guides for practical use are normally manufactured with a minus tolerance, by taking into account that this will (i) prevent optical guides from damaging one another, (ii) secure a reduced thickness of an illumination device, and (iii) tolerate a manufacturing error, and so forth. Thus, as shown in Fig. 6, a gap corresponding to a degree of the minus tolerance is formed in a joint part between the first optical guide and the second optical. This causes a part of light to enter the first optical guide while causing the rest of the light (light shown by a bold arrow in Fig. 6) not to enter the first optical guide but to be outputted upwardly from the second optical guide, the light emitted from the second optical guide via the edge surface (7e) farthermost from the corresponding light source. As described above, such light outputted via the edge surface 7e, instead of the light-emitting surface, is grater in amount than light outputted via the light-emitting surface so that former one of the light has a greater light intensity than the latter one of the light. For this, light outputted upwardly via the edge surface 7e appears as a bright line.

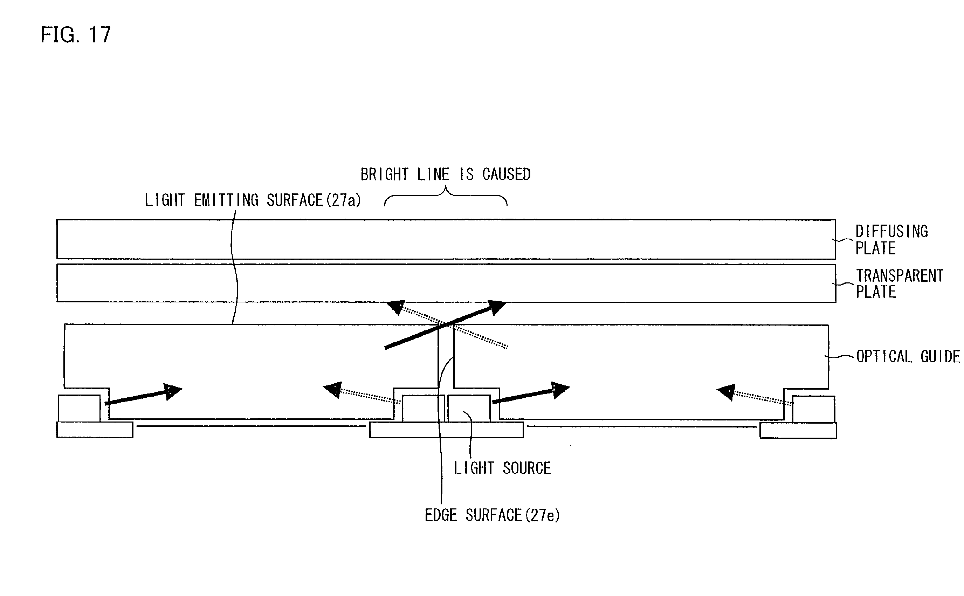

Such a problem caused due to a bright line occurs not only in the tandem backlight but also in a backlight referred to as a tiled backlight, which includes a plurality of optical guides arranged, as show in Fig. 17, in a same plane so as not to overlap one another.

In order to solve the problem caused due to the bright line, Patent Literature 3, for example, teaches an art in which an entire part of a plane disposed between optical guides and a diffusing plate is provided with a dot pattern by which light outputted via optical guides is diffused. With the art, it is possible to diffuse light which unless otherwise causes a bright line. Thus, it is possible to reduce luminance nonuniformity.

With the art, it is possible to reduce the problem of the luminance unevenness caused due to the bright line. Nevertheless, the art suffers another problem of luminance unevenness which is caused due to a pattern of the dot pattern. Even though the dot pattern has a function of diffusing light for luminance uniformity, it is difficult to obtain completely-uniform luminance. As such, the dot pattern, which has a dot distribution density varied accordingly to a distance from a light source, has an influence on luminance unevenness.

Patent Literature 3 also teaches an art in which an edge surface, via which light causing a bright line is outputted, is provided with a light-blocking layer. With the art, it is possible to block light outputted via the edge surface and thereby having a greater intensity. It is therefore possible to prevent the bright line. According to the art, however, the edge surface completely blocks the light, thereby resulting in that a corresponding region causes a dark line. For this, it is still difficult to obtain uniform luminance.

Patent Literature 4 discloses an art in which a diffusing sheet has a reflecting material so as to prevent luminance nonuniformity in a boundary between light-supplier units. With the configuration, it is possible that a region in which the reflecting material is provided prevent a bright line. However, the region completely blocks light, and as such, is instead perceived as a dark line. Thus, it remains difficult to obtain uniform luminance.

A display device adopting such illumination device as a backlight has a deterioration in display quality.

The present invention is made in view of the problem, and an object of the present invention is to provide an illumination device including a plurality of optical guides, with which illumination device can provide a further enhanced luminance uniformity.

In order to attain the object, an illumination device of the present invention is an illumination device, including: a plurality of light sources; a plurality of optical guides each for receiving light from at least one of the plurality of light sources and for causing a surface emission of the light; a diffusing plate for diffusing the light emitted via each of the plurality of optical guides; and a light-amount adjusting section being made from a transflective material and for causing a reduction in amount of light passing through the light-amount adjusting section, the light-amount adjusting section provided on the diffusing plate so as to cover a boundary between adjacent ones of the plurality of optical guides.

The illumination device of the present invention includes a combination of light-emitting surfaces of the respective plurality of optical guides. In the illumination device configured in the way, as described above, light outputted via an edge surface of an optical guide has a greater light intensity than light outputted via a light-emitting surface. Thus, the light outputted via the edge surface forms a bright line, thereby causing brightness unevenness. Note that the bright line is a linear part of light which emits brighter than the remaining part of the light.

In order to deal with this, the illumination device of the present invention is configured such that the light-amount adjusting section, which is made by the transflective material for causing light to be transmitted while causing a reduction in amount of the transmitted light, is provided on the diffusing plate and disposed so as to cover a boundary of adjacent optical guides.

With the configuration, it is possible to reduce a formation of the bright line since outputted via the edge surface can be reduced in amount as it is transmitted through the diffusing plate. Furthermore, the light-amount adjusting section is made from the transflective material. Thus, it is also possible to prevent a case in which it is recognized that a dark line occurs because no light is transmitted in a region where the light-amount adjusting section is provided. By the above, it is possible to enhance luminance uniformity more as compared to the conventional configurations.

In order to attain the object, an illumination device of the present invention is an illumination device, including: a plurality of light sources; a plurality of optical guides each for receiving light from at least one of the plurality of light source and for causing a surface emission of the light; a diffusing plate for diffusing the light emitted via each of the plurality of optical guides; and a light-amount adjusting section being made from a transflective material and for causing a reduction in amount of light passing through the light-amount adjusting section, the light-amount adjusting section provided on the diffusing plate so as to correspond to a region which causes a bright line due to light emitted from corresponding ones of the plurality of light sources.

With the configuration, it is possible to reduce a formation of the bright line since light outputted via the edge surface can be reduced in amount as it is transmitted through the diffusing plate. Furthermore, the light-amount adjusting section is made from the transflective material. Thus, it is also possible to prevent a case in which it is recognized that a dark line occurs because no light is transmitted in a region where the light-amount adjusting section is provided. By the above, it is possible to enhance luminance uniformity more as compared to the conventional configurations.

The illumination device of the present invention can be configured such that each of the plurality of optical guides includes (i) a light-emitting section having a light-emitting surface and (ii) an optical guide section for directing, toward the light-emitting section, the light emitted from the at least one of the plurality of light sources, and any adjacent ones of the plurality of optical guides are provided such that a light-emitting section of one of the any adjacent ones of the plurality of optical guides is on an optical guide section of the other of the any adjacent ones of the plurality of optical guides.

With the configuration, it is possible to realize a tandem illumination device. Since the light-amount adjusting section is provided on the diffusing plate, it is also possible to cause a reduction in amount of light outputted not via the light-emitting surface but via the edge surface farthermost from the light source. Thus, it is possible to enhance luminance uniformity.

The illumination device of the present invention can be configured such that the plurality of optical guides are arranged so as not to overlap one another.

With the configuration, it is possible to realize a tiled illumination device. Since the light-amount adjusting section is provided on the diffusing plate, it is also possible to prevent a bright line from being formed due to the light outputted via the edge surface defining the boundary between adjacent optical guides and thereby having greater intensity. This in turn makes it possible to enhance luminance uniformity.

The illumination device of the present invention can be configured such that at least a pair of the plurality of light sources are provided for each of the plurality of optical guides so as to face each other.

With the configuration, it is possible that each of the pair of light sources emit light so as to irradiate a region (dead area) to which the other of the pair of light source emits no light. Thus, light emitted from the pair of light sources illuminates the dead areas in a complementary way, so that light emission via an entire surface of a light-emitting surface is obtained. This allows the illumination device to have an enhanced luminance uniformity.

The illumination device of the present invention can be configured such that the transflective material is a gray color ink.

With the configuration, it is possible to prevent a bright line and a dark line from being formed, since the light-amount adjusting section made from the transflective material causes incident light to be transmitted while causing a moderate reduction in amount of the transmitted light. It is therefore possible to enhance luminance uniformity more.

The illumination device of the present invention can be configured such that the light-amount adjusting section reflects a part of light incident thereon.

With the configuration, it is possible to scatter more light since light incident on the light-amount adjusting section is reduced in amount and reflected. It is therefore possible to enhance luminance uniformity more.

In order to attain the object, a liquid crystal display device of the present invention includes, as a backlight, any illumination device described so far.

With the configuration in which the illumination device of the present invention is provided, it is possible to realize a liquid crystal display device excellent in luminance uniformity.

Furthermore, as described above, it is possible for the illumination device of the present invention to prevent a dark line from being generated. In a case where a dark line is caused, luminance uniformity requires to be recovered by disposing an optical guide plate and a diffusing plate away from each other by a sufficient distance, as described in Patent Literature 3, paragraph [0077]. This, however, makes it difficult for a device to have a reduced thickness. The illumination device of the present invention, in contrast, can prevent a dark line from being caused. As such, it is possible to shorten a distance between an optical guide plate and a diffusing plate, thereby allowing a device to have a reduced thickness. In view of such circumstances, it is preferable that the illumination device of the present invention be used particularly as a backlight for use in a liquid crystal display device having a thickness of 20 mm or thinner.

For a fuller understanding of the nature and advantages of the invention, reference should be made to the ensuing detailed description taken in conjunction with the accompanying drawings.

### Brief Description of Drawings

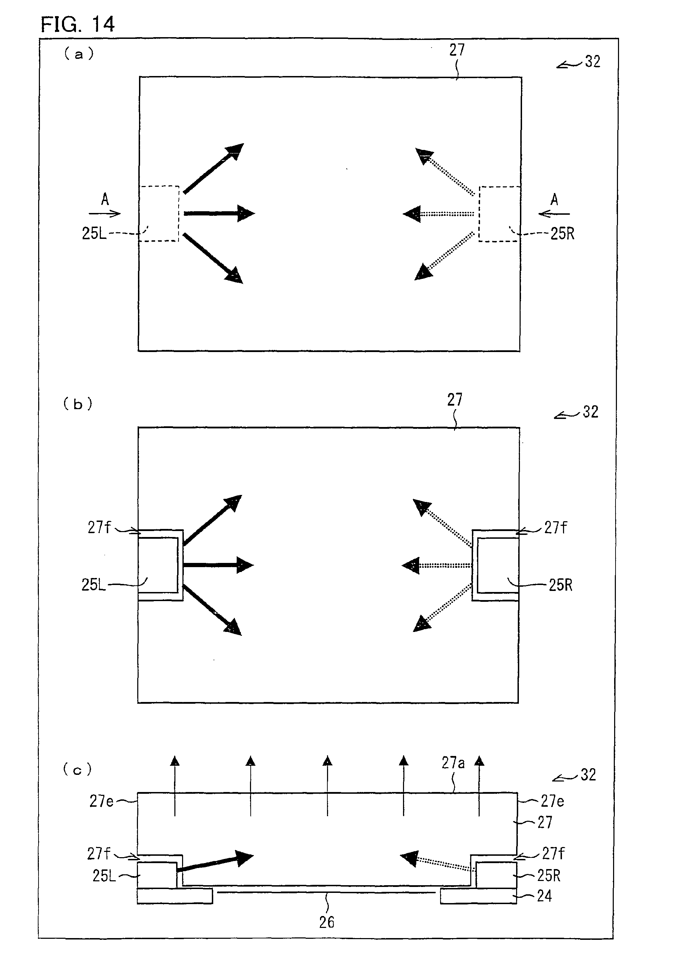

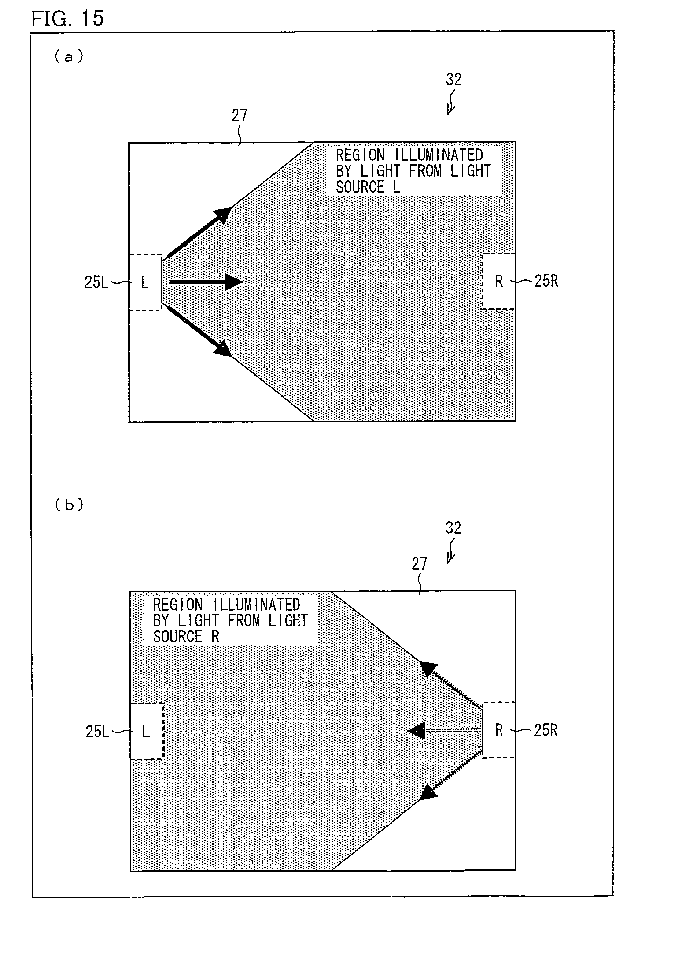

Fig. 1

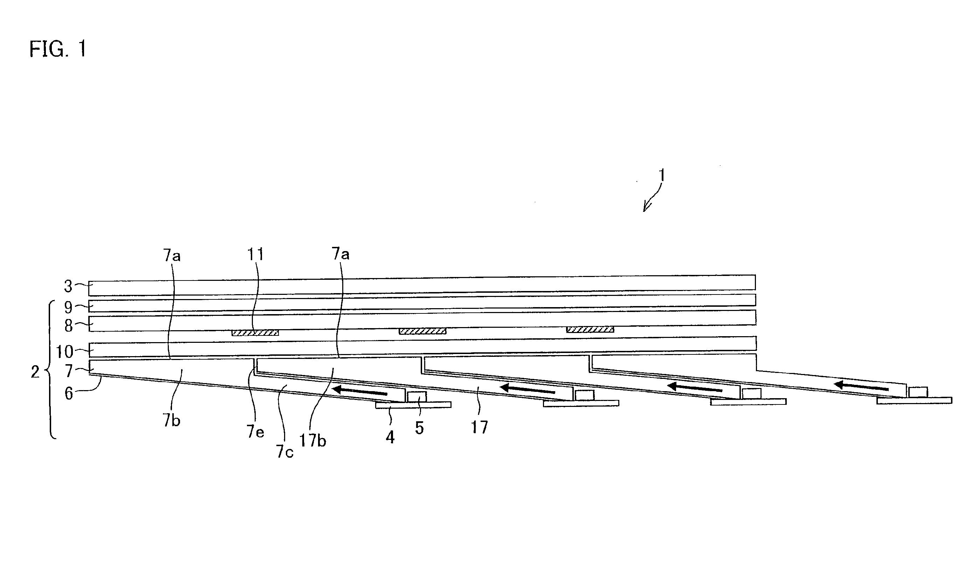

   Fig. 1 is a cross sectional view schematically showing a configuration of a liquid crystal display device in accordance with First Embodiment of the present invention.
Fig. 2

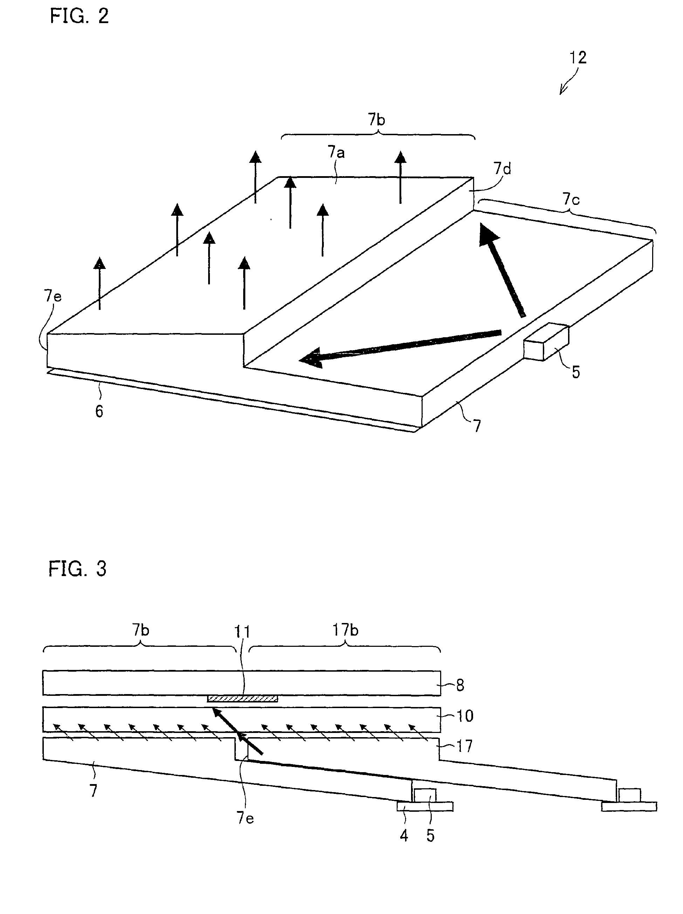

   Fig. 2 is a perspective view schematically showing a configuration of an optical guiding unit in the liquid crystal display device.
Fig. 3
   Fig. 3 is an enlarged cross sectional view showing a part of the liquid crystal display device shown in Fig. 1.
Fig. 4
   Fig. 4 is a plan view showing, from a backlight, a part of a diffusing plate in the liquid crystal display device shown in Fig. 1.
Fig. 5
   Fig. 5 is a cross sectional view schematically showing a configuration of an optical guide in a tandem backlight.
Fig. 6
   Fig. 6 is a cross sectional view schematically showing how the optical guide for actual use is configured.
Fig. 7
   Fig. 7 is a view schematically showing a direction in which light transmitted in the optical guide travels.
Fig. 8
   Fig. 8 is a view schematically showing a direction in which light transmitted in the optical guide travels.
Fig. 9

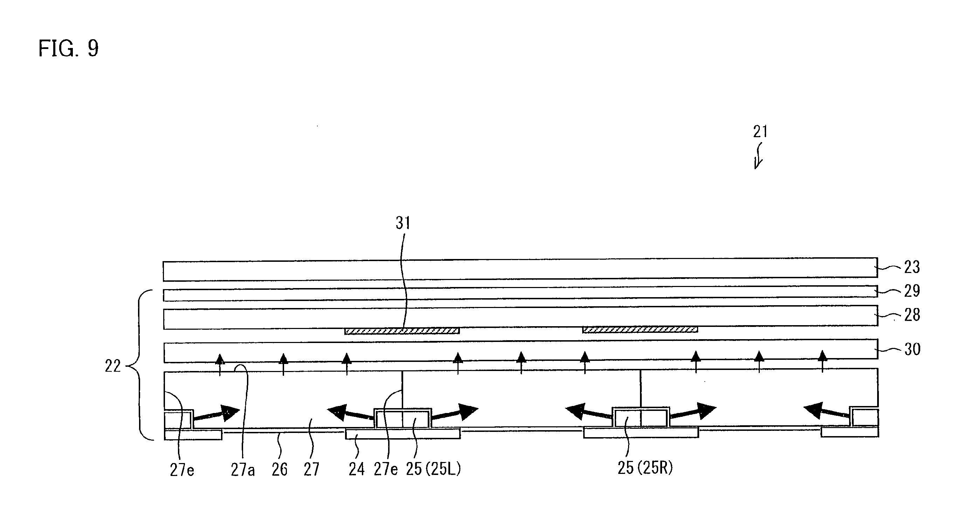

   Fig. 9 is a cross sectional view schematically showing a configuration of a liquid crystal display device in accordance with Second Embodiment of the present invention.
Fig. 10

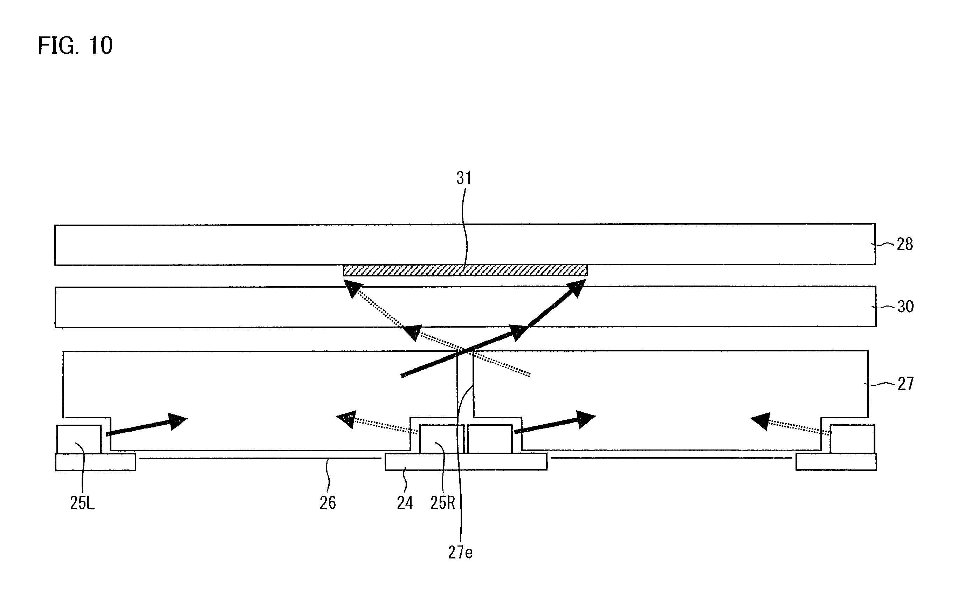

   Fig. 10 is an enlarged cross sectional view showing a part of the liquid crystal display device shown in Fig. 9.
Fig. 11

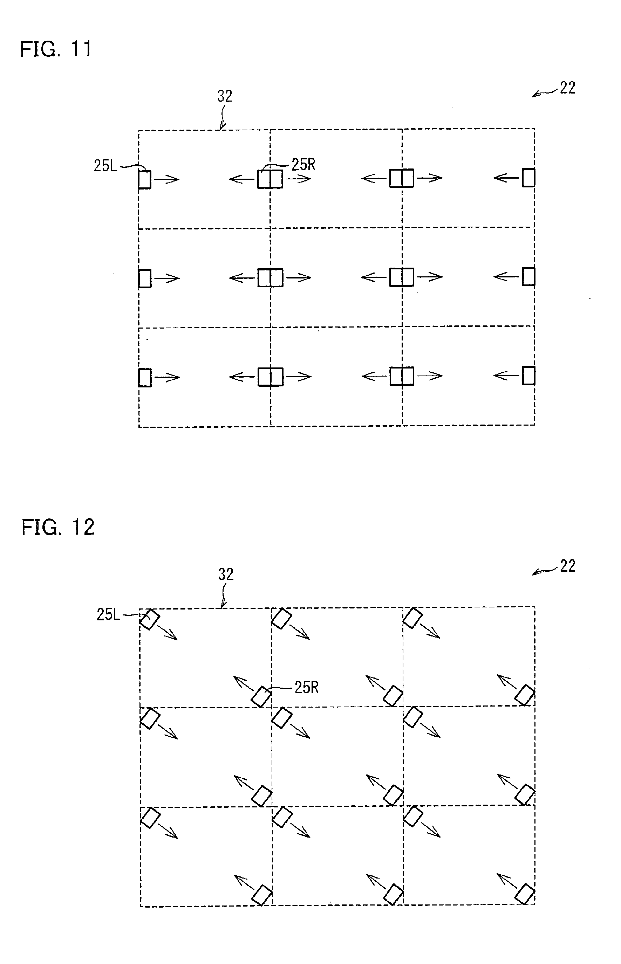

   Fig. 11 is a plan view schematically showing a configuration of a backlight in the liquid crystal display device shown in Fig. 9.
Fig. 12
   Fig. 12 is a plan view schematically showing another example of the configuration of the backlight in the liquid crystal display device shown in Fig. 9.
Fig. 13

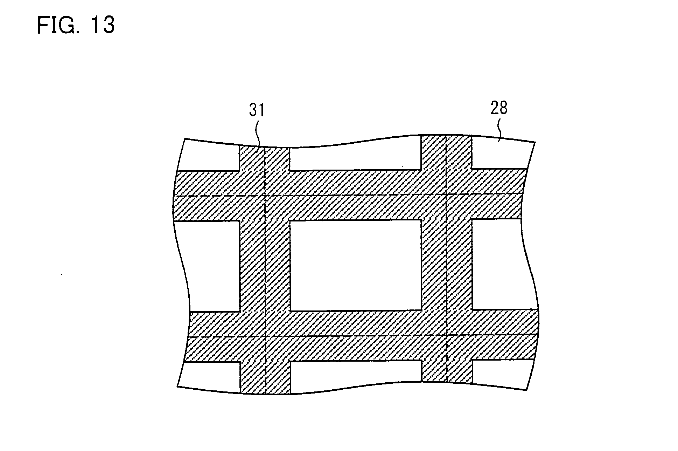

   Fig. 13 is a plan view showing, from the backlight, a part of a diffusing plate in the liquid crystal display device shown in Fig. 9.
   (a) of Fig. 14 is a plan view showing, from a liquid crystal display panel, an optical guide unit in the liquid crystal display device shown in Fig. 9. (b) of Fig. 14 is a plan view showing, from the backlight (rear surface side), the optical guide unit in the liquid crystal display device shown in Fig. 9. (c) of Fig. 14 is a cross sectional view showing, along A-A, the optical guide unit shown in (a) of Fig. 14.
   (a) of Fig. 15 is a view schematically showing a direction in which light emitted from a light source at one side (left) of the optical guide unit travels. (b) of Fig. 15 is a view schematically showing a direction in which light emitted from a light source at opposing side (right) of the optical guide unit travels.
Fig. 16

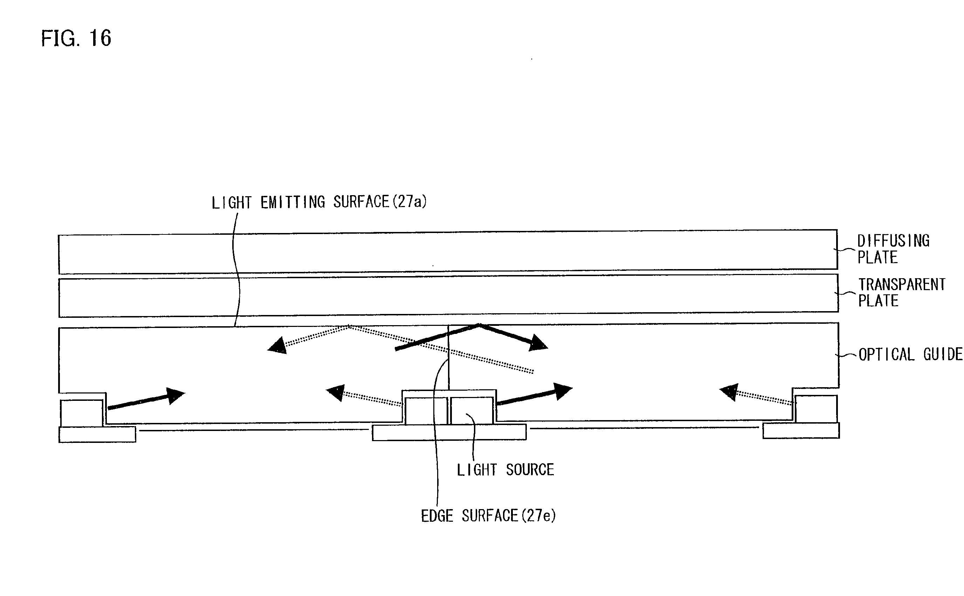

   Fig. 16 is a cross sectional view schematically showing a configuration of a tiled backlight which includes two adjacent optical guide units arranged in contact with each other.
Fig. 17
   Fig. 17 is a cross sectional view schematically showing how the tiled backlight for actual use is configured.

### DESCRIPTION OF REFERENCE NUMERALS

1, 21 liquid crystal display device
2, 22 backlight (illumination device)
3, 23 liquid crystal display panel
4, 24 substrate
5 light source (LED, cold cathode fluorescent tube)
25 (25L, 25R) light source (LED)
6, 26 reflection sheet
7, 17, 27 optical guide
7a, 27a light-emitting surface (of optical guide)
7b, 17b light-emitting section
7c optical guide section
7e, 27e edge surface
8, 28 diffusing plate
9, 29 optical sheet
10, 30 transparent plate
11, 31 light-amount adjusting section
12, 32 optical guide unit

### Description of Embodiments

### (First Embodiment)

First Embodiment of the present invention is described below with reference to Figs. 1 through 8. Note, however, that the present invention is not limited to this.

The present embodiment deals with an illumination device that is used as a backlight for use in a liquid crystal display device.

Fig. 1 is a cross sectional view schematically showing a configuration of a liquid crystal display device 1 in accordance with the present embodiment. The liquid crystal display device 1 includes a backlight 2 (illumination device) and a liquid crystal display panel 3 provided so as to face the backlight 2.

The liquid crystal display panel 3 has a configuration similar to that of a normal liquid crystal display panel for use in a conventional liquid crystal display device. For example, even though it is not illustrated, the liquid crystal display panel 3 includes (i) an active matrix substrate on which a plurality of TFTs (thin film transistors) are provided, (ii) a CF substrate provided so as to face the active matrix substrate, and (iii) a liquid crystal layer sealed between the active matrix substrate and the CF substrate by a sealing material.

The following description discusses in detail how the backlight 2 in the liquid crystal display device 1 is configured.

The backlight 2 is provided behind (opposing side of a display surface) the liquid crystal display panel 3. As shown in Fig. 1, the backlight 2 includes substrates 4, light sources 5, reflection sheets 6, optical guides 7, a diffusing plate 8, an optical sheet 9, a transparent plate 10, and light-amount adjusting sections 11. Note that the backlight 2 includes two or more optical guides. For convenience of explanation, optical guides 7 and 17 are exemplified in the present embodiment. Unless otherwise noted, merely the optical guide 7 out of the optical guides 7 and 17 is described.

Each of the light sources 5 is, for example, a light-emitting diode (LED) of side emission type, a cold cathode fluorescent tube (CCFL), or the like. The following description deals with a case in which each of the light sources 5 is an LED. In a case where each of the light sources 5 is an LED of side emission type in which R, G, and B chips are molded into a signal package, it is possible to obtain an illumination device having a wide color reproduction range. Note that the light sources 5 are provided on the respective substrates 4.

The optical guide 7 causes a surface emission of light via a light-emitting surface 7a, the light being outputted from a corresponding one of the light sources 5. The light-emitting surface 7a is a surface via which the light is outputted toward an object to be irradiated. According to the present invention, the optical guide 7 has a tandem configuration as shown in Fig. 1. Specifically, the optical guide 7 is configured as follows. The optical guide 7 has a light-emitting section 7b having a light-emitting surface 7a, and an optical guide section 7c for directing, toward the light-emitting section 7b, light from the light source 5. The light-emitting section 7b and the optical guide section 7c have respective thicknesses, which differ from each other at least in a region where the light-emitting section 7b and the optical guide section 7c are connected to each other. A light-emitting section 17b of the optical guide 17 is provided so as to be on the optical guide section 7c of the optical guide 7. This causes a light-emitting surface (a light-emitting surface of the entire backlight 2: light-emitting region) to be defined by the light-emitting surfaces 7a (light-emitting surfaces of respective optical guide units) of pairs of the optical guides 7 and 17, which light-emitting surfaces 7a are flush with each other. Note that the reference numeral 7e indicates an edge surface farthermost from the source 5.

Fig. 2 is a perspective view schematically showing how an optical unit 12 in a liquid crystal display device 1 shown in Fig. 1 is configured. The optical guide unit 12 diffuses the light emitted from the light source 5 so as to cause a surface emission of the light. The optical guide unit 12 includes a light source 5, a substrate 4 (see Fig. 1), a reflection sheet 6, and an optical guide 7. As shown in Fig. 2, the light emitted from the light source 5 enters the optical guide section 7c of the optical guide 7, propagates in the optical guide section 7c, and then reaches the light-emitting section 7b. Even though it is not illustrated, the optical guide section 7c of the optical guide 7 has a front surface (the light-emitting surface 7a) or a rear surface, each of which is subjected to a treatment or a process that causes the light directed to the front surface or the rear surface to be outputted in a front direction. As such, the light is outputted toward the liquid crystal display panel 3 via the light-emitting surface 7a of the optical guide 7. Concrete examples of the treatment or the process may encompass prisming, texturing, and printing. However, the present embodiment is not limited to any of them. Any known method can be employed as the treatment or the process, as needed.

The optical guide 7 is mainly made from a transparent resin such as polycarbonate (PC) or polymethyl methacrylate (PMMA). However, the present embodiment is not limited to this. The optical guide 7 is preferably made from a material having a high optical transmittance. The optical guide 7 can be formed by a method such as injection molding, extrusion molding, hot-press molding, or cutting. However, the present embodiment is not limited to this. The optical guide 7 can be formed by a processing method having a similar effect to the above.

The reflection sheet 6 is provided in contact with the rear surface (which is an opposite surface of the light-emitting surface 7a) of the optical guide 7. The reflection sheet 6 by which the incident light is reflected causes an increase in amount of the light outputted via the light-emitting surface 7a. According to the present embodiment in which a plurality of optical guides are provided, reflection sheets 6 are provided for the respective plurality of optical guides, i.e., the respective optical guides 7 and 17.

The diffusing plate 8 is provided (i) so as to cover an entire light-emitting surface defined by the light-emitting surfaces 7a of the respective optical guides 7 and 17, which light-emitting surfaces 7a are flush with each other, and (ii) so as to face the light-emitting surfaces 7a. The diffusing plate 8 diffuses the light outputted from the light-emitting surface 7a of the optical guide 7, and then directs the light thus diffused toward the optical sheet 9 (later described). According to the present embodiment, "SUMIPEX E RMA10" (manufactured by Sumitomo Chemical Co, Ltd) having a thickness of 2.0 mm is employed as the diffusing plate 8. The diffusing plate 8 can be provided so as to be away from the light-emitting surface 7a by a given distance. The given distance is set to, for example, 3.0 mm.

The optical sheet 9 is constituted by a plurality of optical sheets stacked so as to overlap one another on a front side of the light optical guide 7. The optical sheet 9 uniformizes and converges the light outputted via the light-emitting surfaces 7a, and directs the light toward the liquid crystal display panel 3. Thus, employed as the optical sheet 9 can be a sheet such as (i) a diffusing sheet for converging and scattering incident light, (ii) a lens sheet for converging incident light so as to enhance a luminance in a front direction (liquid crystal display panel direction), and/or (iii) a polarized-light reflecting sheet for reflecting one of polarization components of light and transmitting the other of the polarization components of the light so as to enhance a luminance in the liquid crystal display panel 1. It is preferable that the sheets (i) through (iii) be used in combination as needed, in accordance with a price and/or a performance of the liquid crystal display panel 1. According to the present embodiment, as one example, "LIGHT-UP 250GM2" manufactured by KIMOTO CO, LTD is employed as the diffusing sheet, "ThickRBEF" manufactured by Sumitomo 3M Limited is employed as a prism sheet, and "DBEF-D400" manufactured by Sumitomo 3M Limited is employed as the polarization sheet.

The transparent plate 10 is employed in a case where a constant gap is secured between the optical guide 7 and the diffusing plate 8. The transparent plate 10 defines an optical-diffusion region. The transparent plate 10 is made from a transparent material such as a polyethylene film. Note, however, that the present embodiment is not limited to this. Alternatively, it is possible to configure such that no transparent plate 10 is provided, and such that the optical guide 7 and the diffusing plate 8 face each other.

The light-amount adjusting section 11 reduces the amount of incident light, and then transmits it outward. Thus, the light-amount adjusting section 11 is made from a transflective material for causing the incident light to be transmitted while causing a reduction in amount of the transmitted light. Specifically, the light-amount adjusting section 11 can be prepared by, for example, carrying out printing of a gray color ink. Alternatively, the light-amount adjusting section 11 can be prepared by applying or attaching a dielectric mirror, a polarized-light reflecting sheet, or a half mirror such as a cholesteric liquid crystal layer onto the diffusing plate 8. Instead, the light-amount adjusting section 11 can be prepared by applying a resin having a high refractive index onto the diffusing plate 8. Note that the present embodiment is not limited to any of the members, provided that a member has a function of causing a reduction in amount of the incident light.

According to the present embodiment, the light-amount adjusting section 11 is thus made from the transflective material. As such, a region where the light-amount adjusting section 11 is provided can cause a reduction in amount of the light transmitted through the region, while causing the light with a moderate amount to be transmitted through the region, instead of completely blocking the incident light. Thus, in a light-emitting region via which the light is outputted from the backlight 2 toward the liquid crystal display panel 3, it is possible to prevent a bright line and/or a dark line from being formed, so as to enhance luminance uniformity.

With the members as described above, the light emitted from the light source 5 (i) propagates in the optical guide 7 while being scattered and reflected as shown in Figs. 2 and 7, (ii) is outputted via the light-emitting surface 7a of the optical guide 7, and then (iii) reaches the liquid crystal display panel 3 via the diffusing plate 8 and the optical sheet 9.

### (Luminance Uniformity)

The following description discusses how the luminance nonuniformity is caused in principle.

As shown in Fig. 7, light emitted from the light source 5 (i) enters the optical guide section 7c of the optical guide 7 at a certain critical angle, (ii) is repeatedly subjected to total reflection in the optical guide section 7c, (iii) reaches the light-emitting section 7b, (iv) is reflected by the reflection sheet 6 provided on the rear surface of the light-emitting section 7b, and (v) is then outputted via the light-emitting surface 7a. Most of the light emitted from the light source 5 is thus repeatedly subjected to total reflection in the optical guide 7, and is therefore decreased more in amount as it travels farther away from the light source 5.

As shown in Fig. 8, a part of the light emitted from the light source 5 is, however, not subjected to total reflection in the optical guide 7 but directly reaches the edge surface 7e farthermost from the light source 5. Such light has no decrease in amount caused due to the total reflection, and therefore has a greater intensity than the light outputted via the light-emitting surface 7a.

As shown in Fig. 6, according to the optical guides having a tandem configuration, there secures a gap in a boundary between respective light-emitting sections of any two adjacent optical guides. This causes light emitted from a light source to be directly outputted outward via an edge surface 7e of one of any two adjacent optical guides. As such, there causes a bright line due to the light which has been thus outputted outward and has a greater intensity. This gives rise to nonuniform luminance as a whole.

In view of the circumstances, the present embodiment is configured such that the light-amount adjusting section 11 is provided on the diffusing plate 8. This causes a reduction in amount of light which has been outputted via the edge surface 7e of the optical guide 7. The following description discusses how the light-amount adjusting section 11 is concretely provided.

### (Configuration of Light-Amount Adjusting Section 11)

Fig. 3 is an enlarged cross sectional view showing a part of the liquid crystal display device 1 shown in Fig. 1. As shown in Fig. 3, the light-amount adjusting section 11 is provided on the rear surface (a surface closer to the optical guide 7) of the diffusing plate 8. Specifically, the light-amount adjusting section 11 is provided such that its orthogonal projection with respect to the light-emitting surface (light emitting region: a light-emitting surface defined by the light-emitting surfaces 7a of the respective optical guides, which light-emitting surfaces 7a are flush with one another) covers a boundary between adjacent ones (for example, optical guides 7 and 17 shown in Fig. 3) of the optical guides.

This makes it possible to cause a reduction in amount of light which has been outputted via the edge surface 7e of the optical guide 17 and has a greater intensity. It is therefore possible to reduce an intensity of the light from the light source 5, which light directly reaches the edge surface 7e and is outputted via the edge surface 7e. This in turn makes it possible to prevent a bright line from being formed.

Furthermore, the light-amount adjusting section 11 is made from the transflective material. Thus, it is also possible to prevent a case in which it is recognized that a dark line occurs because no light is transmitted in a region where the light-amount adjusting section 11 is provided.

Thus, with the configuration, it is possible to enhance luminance uniformity more as compared to a conventional configuration.

Note here that the boundary linearly extends in a direction orthogonal to a sheet on which Fig. 3 is drawn. As such, when the boundary is viewed from a display surface side of the liquid crystal display panel 3 (see Fig. 1), the boundary is perceived as having a strip shape. It is therefore preferable that as shown in Fig. 4, the light-amount adjusting section 11 be linearly extended from one end to the other end of the diffusing plate 8 so as to correspond to the boundary. Note that Fig. 4 is a partial plan view obtained when the diffusing plate 8 is viewed from the rear surface side (from a side on which the backlight 2 is provided) of the diffusing plate 8. In Fig. 4, an orthogonal projection of the boundary between the adjacent optical guides is shown by dashed line.

As described above, the light-amount adjusting section 11 is provided so that its orthogonal projection with respect to the light-emitting region (the light-emitting surface defined by the light-emitting surfaces 7a of the respective optical guides, which light-emitting surfaces 7a are flush with one another) covers a corresponding boundary between adjacent ones of the optical guides.

The light-amount adjusting section 11 is provided for reducing an amount of the light being transmitted in a region where the light-amount adjusting section 11 is provided, by covering the region that causes a bright line due to light which (i) has been outputted via an edge surface 7e defining a corresponding boundary and (ii) has a greater intensity. In other words, the light-amount adjusting section 11 is provided, on the diffusing plate 8, for the region that causes the bright line due to light from the light source 5.

The light-amount adjusting section 11 shown in Fig. 3 is attached onto the rear surface (the surface closer to the optical guide 7) of the diffusing plate 8. However, the present embodiment is not limited to this. Alternatively, the present embodiment can be configured such that the light-amount adjusting section 11 is (i) attached onto the front surface (the surface above which the liquid crystal display panel 3 is provided) of the diffusing plate 8 or (ii) embedded in the diffusing plate 8.

Note that it is more preferable that the light-amount adjusting section 11 be provided on the rear surface of the diffusing plate 8. This is because, in the case of providing the light-amount adjusting section 11 on the rear surface of the diffusing plate 8, it is possible to shorten a distance between the light-amount adjusting section 11 and a region that causes the bright line. As the distance becomes shorter, the light-amount adjusting section 11 can more easily cover up the bright line before the bright line spreads out. Thus, the light-amount adjusting section 11 can have a reduced area. This makes it possible to prevent the light-amount adjusting section 11 from causing a reduction in amount of light other than the bright line.

It is preferable that the light-amount adjusting section 11 have a function of reflecting a part of the incident light, in addition to the function of causing the incident light to be transmitted while causing a reduction in amount of the transmitted light. This allows a reduction in amount of the light incident on the light-amount adjusting section 11, and allows the light incident on the light-amount adjusting section 11 to be reflected. Since it is thus possible to scatter a more amount of light, it is possible to enhance luminance uniformity more.

Examples of the light-amount adjusting section 11 having both of the above two functions can be realized by (1) a configuration in which two means for carrying out the respective above two functions are provided and (2) a configuration in which a part of the incident light is reflected so that an amount of light transmitted is reduced.

Examples of the above configuration (2) encompass (a) a configuration in which the incident light is divided into reflected light and transmitted light by a dielectric multiple layer, (b) a configuration in which application of a white ink or printing of a white ink is carried out, (c) a configuration in which an opening is provided in a part of a reflection member, (d) a configuration in which attachment of a reflection sheet is carried out, and the like.

The liquid crystal display device 1 of the present embodiment includes the backlight 2 as described above. As such, it is possible for the liquid crystal display panel 3 to be irradiated by more uniform light. This in turn allows an enhancement in display quality.

The illumination device of the present invention can have a further reduced thickness, while maintaining luminance uniformity. In view of the circumstances, it is preferable that the illumination device of the present invention be used as a backlight for use in a liquid crystal display device having a thickness of 20 mm or thinner.

The illumination device of the present invention keeps good luminance uniformity even in a case where it illuminates a large light-emitting area. It is thus preferable that the illumination device of the present invention be particularly used as a backlight for use in a liquid crystal display device having a large screen.

Note, however, that the present invention is not necessarily limited to this. Namely, the present invention can be used as a backlight for use in any liquid crystal display device.

### (Second Embodiment)

The following description discusses Second Embodiment of the present invention with reference to Figs. 9 through 17.

First Embodiment described earlier deals with the tandem backlight. On the other hand, the present embodiment deals with a tiled backlight that includes a plurality of optical guides arranged in a same plane.

Fig. 9 is a cross sectional view schematically showing a configuration of a liquid crystal display device 21 in accordance with the present embodiment. The liquid crystal display device 21 includes a backlight 22 (illumination device) and a liquid crystal display panel 23 provided so as to face the backlight 22. The liquid crystal display panel 23 has a configuration similar to the liquid crystal display panel 3 of First Embodiment.

The following description discusses how the backlight 22 in the liquid crystal display device 21 is configured.

The backlight 22 is provided behind a rear surface (an opposing side of a display surface) of the liquid crystal display panel 23. As shown in Fig. 9, the backlight 22 includes substrates 24, light sources 25, a reflection sheet 26, optical guides 27, a diffusing plate 28, an optical sheet 29, a transparent plate 30, and light-amount adjusting sections 31.

Each of the light sources 25 is, for example, a light source having a dot-like shape, such as a light-emitting diode (LED) of side emission type. The following description deals with a case in which an LED is exemplified as the light source 25. In a case where the light source 25 is an LED of side emission type in which R, G, and B chips are molded into a single package, it is possible to obtain an illumination device having a wide color reproduction range. Note that the light sources 25 are provided on the respective substrates 24.

Each of the optical guides 27 causes a surface emission of light via a light-emitting surface 27a, the light being emitted from a corresponding one of the light sources 25. The light-emitting surface 27a is a surface via which the light is outputted toward an object to be irradiated.

Members other than described above have respective configurations similar to those of the backlight 2 of First Embodiment, and therefore their explanations are omitted.

According to the present embodiment, the backlight 22 includes two or more optical guides. That is, the backlight 22 is configured so that a plurality of optical guide units 32 each include a combination of an optical guide 27 and light sources 25. The plurality of optical guide units 32 are arranged in a same plane.

Fig. 11 is a plan view schematically showing a configuration of the backlight 22. As shown in Fig. 11, the backlight 22 is configured such that the plurality of optical guide units 32, each including two light sources 25L and 25R (a pair of light sources), are provided lengthwise and breadthwise. As described above, the backlight 22 of the present embodiment has a configuration in which the plurality of optical guide units 32 are arranged in a similar fashion to tiling. For this reason, the backlight 22 of the present embodiment is referred to as a tiled backlight.

Fig. 12 is a view showing another configuration example of the backlight 22. Each optical guide unit 32 of the backlight 22 shown in Fig. 11 is configured such that two light sources 25L and 25R are provided in vicinity of respective central regions of opposite sides of an optical guide having a rectangular shape. On the other hand, each optical guide unit 32 of a backlight 22 shown in Fig. 12 is configured such that two light sources 25L and 25R are provided in respective diagonally-opposite corner parts of an optical guide having a rectangular shape.

Fig. 14 is a view showing how one optical unit 32 in the backlight 22 is configured. (a) of Fig. 14 is a plan view (top view) showing an optical guide unit 32 from a liquid crystal display panel 23 (the liquid crystal display panel 23 is provided above the optical guide unit 32). (b) of Fig. 14 is a view (bottom view) showing the optical guide unit 32 in a direction reverse to the case with (a) of Fig. 14. (c) of Fig. 14 is a cross sectional view showing, along A-A, the optical guide unit 32 shown in (a) of Fig. 14.

The optical guide unit 32 shown in Fig. 14 includes two light sources 25L and 25R (a pair of light sources) and an optical guide 27 for causing a surface emission of light from the two light sources 25L and 25R. The light sources 25L and 25R are provided in respective hollow recesses 27f formed within the optical guide 27, so as to face each other. The light sources 25L and 25R are provided on respective substrates 24. As shown in Fig. 14, the light sources 25L and 25R are set so as to emit light in respective directions (which are shown by a solid arrow and a dashed arrow) toward each other.

In the optical guide unit 32, therefore, the two dot-like light sources are provided such that one of the two dot-like sources emits light toward a region toward which the other of the two dot-like sources cannot emit light, and vice versa.

Fig. 15 is a view schematically showing directions in one of which the light emitted from the light source 25L of the optical guide unit 32 travels and in the other of which the light emitted from the light source 25R of the optical guide unit 32 travels. (a) of Fig. 15 shows the direction in which the light emitted from the light source 25L travels, and is a drawing, obtained when viewed from above, in which the light source 25L is provided on a left side of the optical guide unit 32. (b) of Fig. 15 shows the direction in which the light emitted from the light source 25R travels, and is a drawing, obtained when viewed from above, in which the light source 25 R is provided on a right side of the optical guide unit 32.

As shown in Fig. 15, the light sources 25L and 25R are provided so as to face each other and to emit light in the respective directions each toward a central part of the optical guide unit 27. This causes regions, which are irradiated by the light emitted from the respective light sources 25L and 25R, to overlap each other, thereby making it possible to obtain light emission via an entire region of a light-emitting surface 27a of the optical guide unit 27.

According to the present embodiment, a plurality of optical guide units 32, each having the above configuration, are arranged. This allows a large size backlight having no dark region to be obtained. According to the backlight 22 of the present embodiment, the plurality of optical guide units 32 are arranged in a same plane so as not to overlap each other (see Fig. 9). This causes a light-emitting surface (light-emitting region: a light-emitting surface of the entire backlight 22) to be defined by the light-emitting surfaces 27a of the respective optical guides 27, which light-emitting surfaces 27a are flush with one another.

As shown in Fig. 9, light emitted from each light source 25 (i) propagates in an optical guide unit 27 while being scattered and reflected, (ii) is outputted via a light-emitting surface 27a, and (iii) reaches the liquid crystal display panel 23 via the diffusing plate 28 and the optical sheet 29. (Luminance Uniformity)

As in the case with the tandem backlight, the tiled backlight has the following problem. Specifically, a bright line occurs due to a gap formed between any two adjacent optical guides, and an occurrence of the bright line gives rise to a nonuniform luminance. The following description discusses how the luminance nonuniformity is caused as such in principle.

As in the same case with the explanation made with reference to Fig. 7, light emitted from a light source 25 is repeatedly subjected to total reflection in an optical guide unit 27, and then outputted via a light-emitting surface 27a. However, as in the same case with Fig. 8, a part of the light emitted from the light source 25 is not subjected to total reflection in the optical guide 27, but directly reaches an edge surface 27e (see (c) Fig. 14) farthermost from the light source 25. Such light has no decrease in amount caused due to the total reflection, and has a greater intensity than the light emitted via the light-emitting surface 27a.

If adjacent optical guides (an optical guide on a left side and an optical guide on a right side, in Fig. 16) are provided without securing any space between them (see Fig. 16), then light leaked via an edge surface 27e of one of the adjacent optical guides (i) enters the other of the adjacent optical guides via an edge surface 27e, (ii) is subjected to total reflection in the other of the adjacent optical guides, and (iii) is outputted via a light-emitting surface 27a of the other of the adjacent optical guides. As such, no bright line is caused.

According to the tiled backlight for actual use, however, there secures a gap in a boundary between the adjacent optical guides, and this causes light emitted from a light source to be directly outputted outward via an edge surface 27e of an optical guide (see Fig. 17). As such, there causes a bright line due to the light which has been thus outputted and has a greater intensity. This gives rise to nonuniform luminance as a whole.

In view of such circumstances, the tiled backlight of the present embodiment is configured such that a diffusing plate 28 is provided with a light-amount adjusting section 31 for reducing an amount of the light outputted via an edge surface 27e of an optical guide. The following description discusses how the light-amount adjusting section 31 is concretely provided.

### (Configuration of Light-Amount Adjusting Section 31)

Fig. 10 is an enlarged cross sectional view showing a part of a liquid crystal display device 21 shown in Fig. 9. As shown in Fig. 10, the light-amount adjusting section 31 is provided on a rear surface (a surface closer to the optical guide 27) of the diffusing plate 28. Specifically, the light-amount adjusting section 31 is provided such that its orthogonal projection with respect to a light-emitting region (light-emitting surface defined by light-emitting surfaces 27a of the respective optical guides, which light-emitting surfaces 27a are flush with one another) covers a boundary between adjacent ones of the optical guides.

Like the light-amount adjusting section 11 of First Embodiment, the light-amount adjusting section 31 causes incident light to be transmitted outward while causing a reduction in amount of the transmitted light. Thus, the light-amount adjusting section 31 is made from a transflective material for causing the incident light to be transmitted while causing a reduction in amount of the transmitted light. Specifically, the light-amount adjusting section 31 can be prepared by using a same material as the light-amount adjusting section 11 of First Embodiment. For example, the light-amount adjusting section 31 can be prepared by carrying out printing of a gray color ink.

This makes it possible to cause a reduction in amount of light outputted via the edge surface 27e of the optical guide 27 and having a greater intensity. It is therefore possible to reduce an intensity of the light from the light source 25, which light directly reaches the edge surface 27e and is outputted via the edge surface 27e. This in turn makes it possible to prevent a bright line from being formed.

Furthermore, the light-amount adjusting section 31 is made from the transflective material. Thus, it is also possible to prevent a case in which it is recognized that a dark line occurs because no light is transmitted in a region where the light-amount adjusting section 31 is provided.

With the configuration, it is therefore possible to enhance luminance uniformity more as compared to a conventional configuration.

As described above, the light-amount adjusting section 31 is provided so that its orthogonal projection with respect to a light-emitting region (light-emitting surface defined by the light-emitting surfaces 27a of the respective optical guides, which light-emitting surfaces 27a are flush with one another) covers a boundary between adjacent ones of the optical guides.

Fig. 13 is a partial plan view showing the diffusing plate 28 from a rear surface (from a side where the backlight 22 is provided) of the diffusing plate 28. In Fig. 13, a dashed line shows an orthogonal projection of a boundary between any adjacent optical guides. As shown in Fig. 13, the orthogonal projection of the boundary between any adjacent optical guides is arranged in a grid manner. The light-amount adjusting section 31 is provided so as to cover the boundary.

The light-amount adjusting section is provided for reducing an amount of the light which is transmitted in a region where the light-amount adjusting section 31 is provided, by covering the region that causes a bright line due to light (i) outputted via the edge surface 27e defining the boundary and (ii) having a greater intensity. In other words, the light-amount adjusting section 31 is provided, on the diffusing plate 28, for the region that causes the bright line due to the light from the light source 25.

The light-amount adjusting section 31 shown in Fig. 9 is attached onto the rear surface (the surface closer to the optical guides 27) of the diffusing plate 28. However, the present embodiment is not limited to this. Alternatively, the present embodiment can be configured such that the light-amount adjusting section 31 is (i) attached onto the front surface (the surface above which the liquid crystal display panel 23 is provided) of the diffusing plate 28 or (ii) embedded in the diffusing plate 28.

Note that it is more preferable that the light-amount adjusting section 31 be provided on the rear surface of the diffusing plate 28. This is because, in the case of providing the light-amount adjusting section 31 on the rear surface of the diffusing plate 28, it is possible to shorten a distance between the light-amount adjusting section 31 and the region that cause the bright line. As the distance becomes shorter, the light-amount adjusting section 31 can more easily cover up the bright line before the bright line spreads out. Thus, the light-amount adjusting section 31 can have a reduced area. This makes it possible to prevent the light-amount adjusting section 31 from causing a reduction in an amount of light other than the bright line.

Like the light-amount adjusting section 11 of First Embodiment, the light-amount adjusting section 31 may have a function of reflecting a part of the incident light, in addition to the function of causing the incident light to be transmitted while causing a reduction in the amount of the transmitted light.

The liquid crystal display device 21 of the present embodiment includes the backlight 22 as described above. As such, it is possible for the liquid crystal display panel 23 to be irradiated by more uniform light. This in turn allows an improvement in display quality.

The illumination device of the present invention is configured so as to include the light-amount adjusting section being made from a transflective material and for causing a reduction in amount of light passing through the light-amount adjusting section, the light-amount adjusting section provided on the diffusing plate so as to cover a boundary between adjacent ones of the plurality of optical guides.

The illumination device of the present invention is configured so as to include the light-amount adjusting section being made from a transflective material and for causing a reduction in amount of light passing through the light-amount adjusting section, the light-amount adjusting section provided on the diffusing plate so as to correspond to a region which causes a bright line due to light emitted from corresponding ones of the plurality of light sources.

With each of the configurations, it is possible to realize an illumination device capable of enhancing luminance uniformity more.

The liquid crystal display device of the present invention includes, as a backlight, the illumination device of the present invention.

With the configuration, it is possible for the liquid crystal display panel to be irradiated by more uniform light. This brings about an effect that achieves an enhancement in display quality.

The embodiments discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

An illumination device of the present invention can be used as a backlight for use in a liquid crystal display device. Particularly, the illumination device of the present invention can be suitably used as a backlight for use in a large size and / or thin liquid crystal display device.

## Claims

1. An illumination device, comprising:
a plurality of light sources;
a plurality of optical guides each for receiving light from at least one of the plurality of light sources and for causing a surface emission of the light;
a diffusing plate for diffusing the light emitted via each of the plurality of optical guides; and
a light-amount adjusting section being made from a transflective material and for causing a reduction in amount of light passing through the light-amount adjusting section, the light-amount adjusting section provided on the diffusing plate so as to cover a boundary between adjacent ones of the plurality of optical guides.

2. An illumination device, comprising:
a plurality of light sources;
a plurality of optical guides each for receiving light from at least one of the plurality of light source and for causing a surface emission of the light;
a diffusing plate for diffusing the light emitted via each of the plurality of optical guides; and
a light-amount adjusting section being made from a transflective material and for causing a reduction in amount of light passing through the light-amount adjusting section,
the light-amount adjusting section provided on the diffusing plate so as to correspond to a region which causes a bright line due to light emitted from corresponding ones of the plurality of light sources.

3. The illumination device as set forth in Claim 1 or 2, wherein
each of the plurality of optical guides includes (i) a light-emitting section having a light-emitting surface and (ii) an optical guide section for directing, toward the light-emitting section, the light emitted from the at least one of the plurality of light sources, and
any adjacent ones of the plurality of optical guides are provided such that a light-emitting section of one of the any adjacent ones of the plurality of optical guides is on an optical guide section of the other of the any adjacent ones of the plurality of optical guides.

4. The illumination device as set forth in Claim 1 or 2, wherein the plurality of optical guides are arranged so as not to overlap one another.

5. The illumination device as set forth in Claim 4, wherein at least a pair of the plurality of light sources are provided for each of the plurality of optical guides so as to face each other.

6. The illumination device as set forth in any one of Claims 1 through 5, wherein the transflective material is a gray color ink.

7. The illumination device as set forth in any one of Claims 1 through 6, wherein the light-amount adjusting section reflects a part of light incident thereon.

8. A liquid crystal display device, comprising, as a backlight, an illumination device as set forth in any one of Claims 1 through 7.

9. The liquid crystal display device as set forth in Claim 8, which has a thickness of 20 mm or thinner.
